# EUROPEAN PATENT SPECIFICATION

(11) **EP 0 480 049 B1**
(45) Date of publication and mention of the grant of the patent: **07.06.1995**
(21) Application number: 91906512.8
(22) Date of filing: 29.03.1991
(51) Int. Cl.: D06P 3/34, D06P 1/90, D06P 5/00, D06P 3/00, G02B 1/04, G02C 7/04, B29D 11/00

(54) **PROCESS FOR COLORING POLYMER**
VERFAHREN ZUM FÄRBEN VON POLYMEREN
PROCEDE DE COLORATION DE POLYMERE

(30) Priority: 30.03.1990 JP 83834/90
(43) Date of publication of application: 15.04.1992
(73) Proprietor: HOYA CORPORATION, Shinjuku-ku Tokyo 161 (JP)
(72) Inventor: NIIJIMA, Kazuhisa, Kodama-gun, Saitama-ken 367-02 (JP); KIRIYAMA, Hiroshi, Fukaya-shi, Saitama-ken 366 (JP); YOKOYAMA, Yuuichi, Kounosu-shi, Saitama-ken 365 (JP)
(74) Representative: Hansen, Bernd, Dr. Dipl.-Chem.
(86) International application number: JP9100422
(87) International publication number: WO9115626

(56) References cited:
- JP-A- 5 313 673
- JP-A-53 114 876
- JP-A-53 128 667
- JP-A-58 104 286

## Description

The present invention relates to a process for coloring a molded article of a polymer product which is partly in contact with a mold while releasing the molded article from the mold.

The present invention is preferably applied to the coloring of not only a contact lens, particularly a soft contact lens, but also to a variety of polymer products or molded articles other than contact lenses such as films, membranes, etc., formed from hydrogels.

Conventional processes for dyeing hydrogel resin articles are described in JP-A-53-13673 and JP-A-53-128667. These processes are both based on the premise that a hydrogel resin article is brought into a fully swollen state by means of water, a solvent which is more capable of swelling a hydrogen resin article than water and compatible with water, or a mixed solvent of water and said solvent. That is, a hydrogel resin article is dyed as follows: After a hydrogel resin article is fully swollen, the hydrogel resin article is infiltrated with a water-soluble dye or a leuco or colorless compound thereof, and subjected to water-insolubilization and color-forming treatments.

In the processes proposed in the above two Publications, in short, the step of swelling a polymer product to be dyed, and the step of infiltrating a water-soluble dye or a leuco or colorless compound thereof into the swollen polymer product are isolated from each other as a separate step. For this reason, the above processes have had a problem in that the infiltration of the dye into the swollen polymer product is liable to be nonuniform and it is difficult to dye a number of polymer products in a uniform dyed state.

US-A-4 494 954 reveals a process for producing a colored shaped article wherein a shaped article consisting of a substantially non-hydrous polymer is immersed in a dyeing solution prepared by dissolving a water-soluble dye in a solvent capable of swelling said polymer; said solvent being used alone or in combination of up to 20 parts by weight of water or up to 10 parts by weight of an aqueous alkaline reducing solution per 100 parts by weight of the solvent; the shaped article is swollen and colored and the swollen shaped article is dried.

GB-A-1 583 492 discloses a method of dyeing a hydrogel resin which comprises impregnating the hydrogen resin with a water-soluble vat dye or tetrazolium salt and thereafter converting said dye or salt in the hydrogen resin to water-insoluble, colored material.

The present invention has been made to overcome the above problem.

The object of the present invention is to provide a process for coloring a molded article of a polymer product being partly in contact with a mold while releasing the molded articles from molds, according to which a large quantity of molded articles can be colored uniformly with a decrease in the number of steps.

The present invention has been made to achieve the above object.

The process for coloring a molded article to achieve the above object comprises;
a step of immersing a molded article being formed of a polymer product which is swellable in water or a water-containing mixed solvent and being partly in contact with a mold, in a treating liquid comprising a water-containing mixed solvent containing a colorant having affinity to said molded article thereby to carry out the releasing of said molded article from the mold, the swelling of said molded article and the infiltration of the above colorant into said molded article at the same time, and
a step of immersing the above molded article treated in the above step, in water, an acidic aqueous solution or an aqueous solution of an oxidizing agent thereby to fix the above colorant.

In the process of the present invention, the molded article to be colored is limited to polymer products which can swell in water or a water-containing mixed solvent. Such polymer products include products produced from materials such as a hydroxyethyl methacrylate (HEMA) polymer, an N-vinylpyrrolidone (NVP) polymer, an N-vinylpyrrolidone (NVP)-methyl methacrylate (MMA) copolymer, an HEMA-MMA-methacrylic acid (MA) copolymer, a copolymer composed mainly of HEMA and NVP, a glycerol methacrylate-MMA copolymer, polyvinyl alcohol, polyacrylamide, and a polyacrylamide derivative.

In the process for coloring a molded article, provided by the present invention, first, there is carried out a step in which the above molded article is immersed in a treating liquid comprising a water-containing mixed solvent containing a colorant having affinity to said molded article. As a colorant, any colorant may be used if it has affinity to a polymer product to be colored. Generally preferred are solubilized vat dyes such as Red 1, Blue 1, 2 or 6, Green 1, Brown 1, Black 1 and vat dyes such as Blue 1, 3, 4 or 5, Green 1, 3, 13 or 45, Orange 3, 5 or 13. The colorant can be properly selected depending upon the kind of a polymer product to be colored and a color to be applied to the polymer product.

The water-containing mixed solvent is preferably selected from those which are obtained by mixing water with organic solvents: Examples of the organic solvents are alcohols such as methanol, ethanol, isopropanol, n-butanol, ketones such as acetone, methyl ethyl ketone, glycols such as ethylene glycol, propylene glycol, diethylene glycol or triethylene glycol. The above colorant is added to this water-containing mixed solvent, whereby there is obtained a treating liquid in which the colorant is homogeneously dissolved in the water-containing mixed solvent.

The reason for the use of a water-containing mixed solvent as a solvent to dissolve the colorant is as follows. By increasing the swelling ratio of the molded article, the pore diameter of the molded article is enlarged up to a size suitable for coloring, and the treating liquid in which the colorant is dissolved is rapidly infiltrated into the whole of the polymer product, whereby the molded article is uniformly colored.

The use of water alone as a solvent has a problem in that the treating liquid in which the colorant is dissolved is hardly infiltrated due to a small swelling ratio of the molded article and a small pore diameter of the molded article. The use of an organic solvent alone has a problem in that it is difficult to dissolve the colorant up to a concentration necessary for the coloring since the solubility of the colorant in the organic solvent is low.

In the water-containing mixed solvent, the water/organic solvent mixing ratio is preferably 20:80 to 80:20. The reason therefor is that when the content of water is greater than this range, the molded article sometimes has a small swelling ratio and an insufficient pore diameter, and that when the content of the organic solvent is greater, the solubility of the colorant in the mixed solvent is sometimes insufficient. When a vat dye is used, however, it is preferred to add a reducing agent, to the water-containing mixed solvent in order to dissolve the colorant in the water-containing mixed solvent uniformly. The reason for adding the reducing agent is that since a vat dye is a water-insoluble dye, the vat dye is converted to a water-soluble leuco compound with the reducing agent. As a reducing agent, preferred is, for example, hydrosulfite (Na₂S₂O₄).

When the above molded article is immersed in the treating liquid comprising a water-containing solvent containing a colorant, the molded article is swollen, and the colorant is uniformly infiltrated into the molded article.

The water-containing mixed solvent may contain, for example, sodium nitrite or sodium sulfite in order to proceed with the color-forming reaction rapidly. The amount thereof for use is preferably 0.5 to 2 % by weight. Further, the water-containing mixed solvent may contain, for example, sodium hydrogencarbonate, potassium hydrogencarbonate, sodium chloride or sodium sulfate in order to increase the stability of the treating liquid. The amount thereof for use is preferably 0.5 to 2 % by weight.

In the process for coloring a molded article, provided by the present invention, there is carried out a step in which the swollen molded article is immersed in water, an acidic aqueous solution or an aqueous solution of an oxidizing agent. The acidic aqueous solution or the aqueous solution of an oxidizing agent used in this step is selected from aqueous solutions of acetic acid, sulfuric acid, nitric acid, hydrochloric acid, hypochlorous acid and boric acid. When the molded article is immersed in water, the acidic aqueous solution or the aqueous solution of an oxidizing agent, the colorant in the molded article is fixed to give a uniformly colored molded article.

When the molded article is a contact lens, the contact lens, which has been subjected to the above fixing treatment, is immersed in a sodium hydrogencarbonate aqueous solution, heat-treated, and brought into an equilibrium hydrous state in a physiological saline solution or a contact lens preservation liquid (buffer solution of which the pH and osmotic pressure are adjusted), whereby there is obtained a colored hydrous soft contact lens.

The process for coloring a molded article, provided by the present invention will be explained below in more detail. The process for coloring a molded article starts from a molded article being formed of a polymer product which is swellable in water or a water-containing mixed solvent and being partly in contact with a mold.

In the process for coloring a molded article, provided by the present invention, the article to be colored is a molded article formed of a polymer product which is swellable in water or the water-containing mixed solvent and being partly in contact (usually in tight contact) with a mold. Such a molded article includes a contact lens material obtained by a so-called single-sided cast method in which a monomer is cast into an open-top cylindrical polymerization reactor (also called a single-sided casting mold) and heat- or photopolymerized. The resultant contact lens material is in a state in which it is tightly in contact with the bottom of the mold. As this mold, preferred is a mold which has a bottom of a curved surface for forming a convex or concave surface of a soft contact lens and is formed from a plastic material such as polyethylene, polypropylene, polycarbonate, polysulfone, etc. The reason therefor is that the above contact lens material obtained by the polymerization can be formed into a contact lens by cutting and polishing the molded article together with the mold while the molded article is tightly in contact with the bottom of the mold. The mold is also partially cut off due to the cutting and polishing, and the molded article having a contact lens form is tightly in contact with the bottom of the mold. After the cutting and polishing, the molded article having a contact lens form and being tightly in contact with the bottom of the mold is immersed in the treating liquid comprising a water-containing mixed solvent containing a colorant having affinity to said molded article, whereby the molded article is swollen and the colorant is infiltrated into the molded article, and the release of the molded article from the mold occurs.

Thereafter the molded article is immersed in water, an acidic aqueous solution or an aqueous solution of an oxidizing agent, whereby the colorant is fixed to give a uniformly colored molded article. In addition, after the fixing treatment, the molded article having a contact lens form is consecutively immersed in an aqueous sodium hydrogencarbonate solution, heat-treated and immersed in a physiological saline solution or a contact lens preservation liquid to give a colored hydrous soft contact lens, which procedure and result are the same as those in the above process for coloring a polymer product.

According to the process for coloring a molded article, provided by the present invention, swelling a polymer product or a molded article and infiltrating a colorant into the molded article are carried out at the same time as specified above. Therefore, not only the procedure is simplified as compared with the afore-described processes of prior arts in which they are carried out separately, but also there is produced a remarkable effect that a colorant is uniformly infiltrated into the polymer product or the molded article. Therefore, a number of molded articles can be colored in a uniform colored state with a decrease in the number of steps, and the present invention has great industrial significance.

The present invention will be further detailed by reference to Examples.

### Example 1

A soft contact lens material formed from HEMA as a main monomer component, which had been obtained by the polymerization in an open-top cylindrical polymerization container (single-sided casting mold) having a bottom with a curvature corresponding to a base curve (inner surface curve) of the contact lens and being formed from a plastic material, was cut and polished in the front curve (outer surface curve) while it was tightly in contact with the single-sided casting mold, whereby there was obtained a contact lens of which the base curve was tightly in contact with the bottom of the single-sided casting mold. Then, the single-sided casting mold with the contact lens tightly in contact with it was placed in a beaker, and a treating liquid containing a colorant and a water-containing mixed solvent (consisting of 0.03 part by weight of solubilized vat dye Blue 6, 50 parts by weight of distilled water, 50 parts by weight of reagent special-grade ethanol, 0.5 part by weight of reagent special-grade sodium hydrogencarbonate and 0.5 part by weight of reagent special-grade sodium sulfite) was poured in the beaker. The single-sided casting mold was immersed in the treating liquid for 75 minutes to release the contact lens from the single-sided casting mold and at the same time to carry out the swelling of the lens and the infiltration of the colorant into the lens. The contact lens released from the single-sided casting mold was colored yellow or yellowish brown. The above treating liquid was discharged from the beaker. An aqueous solution containing 1 % by weight of sulfuric acid was newly poured into the beaker, and the contact lens was immersed therein for 75 minutes. The contact lens was shrunk from its swollen state to show the coloring of blue. Then, the aqueous solution containing 1 % by weight of sulfuric acid was discharged, and an aqueous solution containing 1 % by weight of sodium hydrogencarbonate was poured in the beaker, in which the contact lens was immersed for 75 minutes. Thereafter, this solution was replaced with a fresh aqueous solution containing 1 % by weight of sodium hydrogencarbonate, and the contact lens was immersed in this sodium hydrogencarbonate aqueous solution for 75 minutes. In this state, the contact lens was in a swollen state nearly equivalent to the final product standard, and the lens had strength sufficient to handle it with a pair of tweezers or by fingers. The solution had weak alkalinity of pH of 7 to 8, and the aqueous solution containing 1 % by weight of sulfuric acid was neutralized. The lens was taken out of the beaker, and transferred into a fresh aqueous solution containing 1 % by weight of sodium hydrogencarbonate. The lens was heated at 80°C for 90 minutes, and then heated in a physiological saline solution at 80°C for 90 minutes twice to give a blue-colored hydrous contact lens.

When this colored hydrous soft contact lens was heated in boiling water for 100 hours, no change in coloring occurred. Further, this soft contact lens passed the elution test based on the contact lens acceptance standard published by Ministry of Health and Welfare.

The above colored soft contact lens was sectioned, and its cross section was optically magnified and observed with an optical microscope to show that the soft contact lens was uniformly colored deep into its central portion without unevenness.

This Example has shown that the release of the lens from the mold and the infiltration of the colorant take place at the same time, and the lens is uniformly colored, since the lens is in a state in which it is released from the mold and swollen, and the colorant is brought into an equilibrium state in which it is infiltrated deep into the lens central portion.

### Example 2

A colored soft contact lens was prepared in the same manner as in Example 1 except that a polishing material remained adhering to the contact lens surface after the cutting and polishing of the front curve (outer surface curve). Portions of the lens surface to which the polishing material was adhering did not show any nonuniformity in the coloring. This Example has shown that the colorant infiltrates into the lens concurrently with the swelling of the lens, nonuniformity in the coloring due to a foreign matter adhering to the lens surface is not caused.

### Example 3

A soft contact lens material formed from N-vinylpyrrolidone (NVP) as a main component and obtained by the polymerization in a single-sided casting mold was cut and polished in the front curve while it was tightly in contact with the single-sided casting mold to give a contact lens of which the base curve was tightly in contact with the bottom of the single-sided casting mold. The single-sided casting mold with the contact lens tightly in contact with it was placed in a beaker. Then a treating liquid containing a colorant and water-containing mixed solvent (consisting of 0.06 part by weight of a solubilized vat dye Red 1, 40 parts by weight of distilled water, 60 parts by weight of reagent special-grade isopropanol and 0.5 part by weight of reagent special-grade potassium hydrogencarbonate) was poured in the beaker, in which the single-sided casting mold with the contact lens was immersed for 60 minutes, whereby the contact lens was released from the single-sided casting mold and at the same time, the swelling of the lens and the infiltration of the colorant into the lens were completed. The above treating liquid was discharged from the beaker, and an aqueous solution containing 5 % by weight of acetic acid was newly poured to immerse the contact lens therein for 75 minutes. The contact lens was shrunk from the swelling state to show the coloring of red. Then, the above solution was replaced with an aqueous solution containing 1 % by weight of sodium hydrogencarbonate, and the contact lens was immersed therein for 75 minutes. The lens was taken out of the beaker, transferred into a fresh aqueous solution containing 1 % by weight of sodium hydrogencarbonate, and heated at 80° C for 90 minutes. Further, the lens was heated in a physiological saline solution at 80° C for 90 minutes twice to give a red-colored soft contact lens. The colored state thereof was as excellent as that in Example 1.

### Example 4

A soft contact lens material obtained by the polymerization in a single-sided casting mold and formed mainly from N-vinylpyrrolidone (NVP), methyl methacrylate (MMA) and ethylene glycol dimethacrylate (EGDMA), was cut and polished in the front curve while it was tightly in contact with the single-sided casting mold to give a contact lens of which the base curve was tightly in contact with the bottom of the single-sided casting mold. The single-sided casting mold with the contact lens tightly in contact with it was placed in a beaker. Then a treating liquid containing a colorant and water-containing mixed solvent (consisting of 0.06 part by weight of a solubilized vat dye Green 1, 20 parts by weight of distilled water, 80 parts by weight of reagent special-grade acetone, 0.5 part by weight of reagent special-grade sodium nitrite and 0.5 part by weight of reagent special-grade sodium hydrogencarbonate ) was poured in the beaker, in which the single-sided casting mold with the contact lens was immersed for 90 minutes, whereby the contact lens was released from the single-sided casting mold and at the same time, the swelling of the lens and the infiltration of the colorant into the lens were completed. The above treating liquid was discharged from the beaker, and an aqueous solution containing 1 % by weight of nitric acid was newly poured to immerse the contact lens therein for 90 minutes. The contact lens was shrunk from the swelling state to show the coloring of green. Then, the above solution was replaced with an aqueous solution containing 1 % by weight of sodium hydrogencarbonate, and the contact lens was immersed therein for 90 minutes. The lens was taken out of the beaker, transferred into a fresh aqueous solution containing 1 % by weight of sodium hydrogencarbonate, and heated at 80° C for 90 minutes. Further, the lens was heated in a physiological saline solution at 80° C for 90 minutes twice to give a green-colored soft contact lens. The colored state thereof was as excellent as that in Example 1.

### Example 5

A soft contact lens material formed from hydroxyethyl methacrylate (HEMA) as a main component and obtained by the polymerization in a single-sided casting mold was cut and polished in the front curve while it was tightly in contact with the single-sided casting mold to give a contact lens of which the base curve was tightly in contact with the bottom of the single-sided casting mold. The single-sided casting mold with the contact lens tightly in contact with it was placed in a beaker. Then a treating liquid containing a colorant and water-containing mixed solvent (consisting of 0.03 part by weight of a solubilized vat dye Black 1, 50 parts by weight of distilled water, 50 parts by weight of reagent special-grade ethyl alcohol, 0.5 part by weight of reagent special-grade sodium nitrite and 0.5 part by weight of reagent special-grade potassium hydrogencarbonate) was poured in the beaker, in which the single-sided casting mold with the contact lens was immersed, for 90 minutes, whereby the contact lens was released from the single-sided casting mold and at the same time, the swelling of the lens and the infiltration of the colorant into the lens were completed. The above treating liquid was discharged from the beaker, and the above solution was replaced with a fresh aqueous solution containing 0.1 % by weight of hypochlorous acid to immerse the contact lens therein for 60 minutes. The lens was taken out of the beaker, transferred into a fresh aqueous solution containing 1 % by weight of sodium hydrogencarbonate, and heated at 80° C for 90 minutes. Further, the lens was heated in a physiological saline solution at 80° C for 90 minutes twice to give a black-colored soft contact lens. The colored state thereof was as excellent as that in Example 1.

As specified above, according to the present invention, molded articles can be colored uniformly and in a large quantity. Further, since the number of the production steps can be decreased, the production efficiency can be improved remarkably. In particular, the present invention is very useful for coloring soft contact lenses obtained by a single-sided casting method.

## Claims

1. A process for coloring a molded article which comprises:
a step of immersing a molded article being formed of a polymer product which is swellable in water or a water-containing mixed solvent and being partly in contact with a mold, in a treating liquid comprising a water-containing mixed solvent containing a colorant having affinity to said molded article thereby to carry out the releasing of said molded article from the mold, the swelling of said molded article and the infiltration of the above colorant into said molded article at the same time, and
a step of immersing the above molded article treated in the above step, in water, an acidic aqueous solution or an aqueous solution of an oxidizing agent thereby to fix the above colorant.

2. A process according to claim 1, wherein the molded article is formed from material selected from the group consisting of a hydroxyethyl methacrylate (HEMA) polymer, an N-vinylpyrrolidone (NVP) polymer, an N-vinylpyrrolidone (NVP)-methyl methacrylate (MMA) copolymer, an HEMA-MMA-methacrylic acid (MA) copolymer, a copolymer formed from HEMA and NVP as a main component, a glycerol methacrylate-MMA copolymer, polyvinyl alcohol, polyacrylamide and polyacrylamide derivative.

3. A process according to claim 1 or 2, wherein the molded article is a contact lens molded article.

4. A process according to claim 1, wherein the water-containing mixed solvent is a mixture of water with at least one organic solvent selected from the group consisting of alcohols, ketones and glycols.

5. A process according to claim 1, wherein the colorant is a solubilized vat dye or a vat dye.

6. A process according to claim 1, wherein the acidic aqueous solution or the aqueous solution of an oxidizing agent is an aqueous solution of a compound selected from acetic acid, sulfuric acid, nitric acid, hydrochloric acid, hypochlorous acid and boric acid.

## Patentansprüche

1. Verfahren zum Färben eines Formkörpers, welches umfasst:
den Schritt des Eintauchens eines Formkörpers, der aus einem Polymerprodukt gebildet wird, das in Wasser oder einer Wasser enthaltenden Lösungsmittelmischung quellbar ist, und sich teilweise in Kontakt mit einer Form befindet, in eine Behandlungsflüssigkeit, die eine Wasser enthaltende Lösungsmittelmischung, die ein Färbemittel mit Affinität zu dem Formkörper enthält, umfasst, und dadurch gleichzeitig das Ablösen des Formkörpers, das Quellen des Formkörpers und das Einziehen des Färbemittels in den Formkörper zu bewirken, und
den Schritt des Eintauchens des Formkörpers, den man in obigem Schritt behandelt, in Wasser, eine saure wässrige Lösung oder eine wässrige Lösung eines Oxidationsmittels, um dadurch obiges Färbemittel zu fixieren.

2. Verfahren gemäss Anspruch 1, bei dem der Formkörper gebildet wird aus einem Material, ausgewählt aus der Gruppe bestehend aus Hydroxyethylmethacrylat (HEMA)-Polymer, einem N-Vinylpyrrolidon (NVP)-Polymer, einem N-Vinylpyrrolidon (NVP)-Methylmethacrylat (MMA)-Copolymer, einem HEMA-MMA-Methacrylsäure (MA)-Copolymer, einem aus HEMA und NVP als Hauptkomponente gebildeten Copolymer, einem Glycerinmethacrylat-MMA-Copolymer, Polyvinylalkohol, Polyacrylamid und einem Polyacrylamidderivat.

3. Verfahren gemäss Ansprüchen 1 oder 2, bei dem der Formkörper eine Kontaktlinse ist.

4. Verfahren gemäss Anspruch 1, in dem die Wasser enthaltende Lösungsmittelmischung eine Mischung aus Wasser mit mindestens einem organischen Lösungsmittel, ausgewählt aus der Gruppe bestehend aus Alkoholen, Ketonen und Glykolen ist.

5. Verfahren gemäss Anspruch 1, bei dem das Färbemittel ein löslich gemachter Küpenfarbstoff oder ein Küpenfarbstoff ist.

6. Verfahren gemäss Anspruch 1, bei dem die saure wässrige Lösung oder die wässrige Lösung eines Oxidationsmittels eine wässrige Lösung einer Verbindung, ausgewählt aus Essigsäure, Schwefelsäure, Salpetersäure, Chlorwasserstoffsäure, Hypochlorsäure und Borsäure ist.

## Revendications

1. Procédé de coloration d'un article moulé, qui comprend :
une étape d'immersion d'un article moulé, constitué d'un produit polymère gonflable dans l'eau ou dans un solvant mixte renfermant de l'eau, et partiellement en contact avec un moule, dans un liquide de traitement comprenant un solvant mixte renfermant de l'eau, contenant un colorant ayant de l'affinité pour ledit article moulé, pour réaliser ainsi simultanément la libération dudit article moulé du moule, le gonflement dudit article moulé et l'infiltration du colorant précédent dans ledit article moulé, et
une étape d'immersion de l'article moulé ci-dessus, traité dans l'étape précédente, dans de l'eau, une solution aqueuse acide ou une solution aqueuse d'un agent oxydant, pour fixer ainsi le colorant précédent.

2. Procédé selon la revendication 1, dans lequel l'article moulé est constitué d'une matière choisie parmi les polymères de méthacrylate d'hydroxyéthyle (HEMA), les polymères de N-vinylpyrrolidone (NVP), les copolymères de N-vinylpyrrolidone (NVP) et de méthacrylate de méthyle (MMA), les copolymères de HEMA, de MMA et d'acide méthacrylique (MA), les copolymères composés de HEMA et de NVP comme constituant principal, les copolymères de méthacrylate de glycérol et de MMA, les poly(alcool vinylique), les polyacrylamides et les dérivés de polyacrylamide.

3. Procédé selon la revendication 1 ou 2, dans lequel l'article moulé est un article moulé en forme de lentille de contact.

4. Procédé selon la revendication 1, dans lequel le solvant mixte renfermant de l'eau est un mélange d'eau et d'au moins un solvant organique, choisi dans le groupe constitué des alcools, des cétones et des glycols.

5. Procédé selon la revendication 1, dans lequel le colorant est un colorant de cuve solubilisé ou un colorant de cuve.

6. Procédé selon la revendication 1, dans lequel la solution aqueuse acide ou la solution aqueuse d'un agent oxydant est une solution aqueuse d'un composé choisi parmi l'acide acétique, l'acide sulfurique, l'acide nitrique, l'acide chlorhydrique, l'acide hypochloreux et l'acide borique.
